(19) Europäisches Patentamt European Patent Office Office européen des brevets

(11) **EP 3 040 700 B1**

(12) **EUROPEAN PATENT SPECIFICATION**

(45) Date of publication and mention
of the grant of the patent:
**24.04.2019 Bulletin 2019/17**

(51) Int Cl.:
**G01M 5/00** *(2006.01)*

(21) Application number: **14200502.4**

(22) Date of filing: **29.12.2014**

(54) **A method and a system for structural health monitoring**

Verfahren und System zur strukturellen Integritätsüberwachung

Procédé et système de surveillance d'état structurel

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**06.07.2016 Bulletin 2016/27**

(73) Proprietor: **Akademia Gorniczo-Hutnicza im.
Stanislawa
Staszica w Krakowie
30-059 Krakow (PL)**

(72) Inventors:
• **Staszewski, Wieslaw J
  64-840 Budzyn (PL)**
• **Dao, Phong
  Ha Noi city (VN)**

• **Zolna, Konrad
  32-500 Chrzanow (PL)**

(74) Representative: **Kancelaria Eupatent.pl Sp. z.o.o
Ul. Kilinskiego 185
90-348 Lodz (PL)**

(56) References cited:
• **FOTIS P KOPSAFTOPOULOS ET AL:
"Identification of Stochastic Systems Under
Multiple Operating Conditions: The Vector
Dependent FP-ARX Parametrization", CONTROL
AND AUTOMATION, 2006. 14TH
MEDITERRANEAN CONFERENCE ON, IEEE, PI, 1
June 2006 (2006-06-01), pages 1-6, XP031057328,
DOI: 10.1109/MED.2006.236828 ISBN:
978-0-9786720-1-0**

**Description**

TECHNICAL FIELD

The present invention relates to a method and a system structural health monitoring.

BACKGROUND

Structural Health Monitoring (SHM) plays an important role in maintenance of air, sea and land transportation, civil infrastructure, energy supply systems and many industrial installations. Damage detection in SHM involves: observation of structure or mechanical systems over time using periodically spaced measurements, extraction of damage-sensitive features from these measurements and statistical analysis of these features, to determine the current operational condition.

One of the major problems that limits practical and commercial applications of SHM to real engineering structures is that many data and extracted features used for damage detection are often corrupted by ambient environment and operational conditions. A reliable SHM system should be able to distinguish between changes caused by damage and those caused by time-varying environmental and operational conditions.

Various approaches were developed to deal with the undesired effect of environmental and operational variability in data used for damage detection.

A US patent application US20080011091 discloses a method for measuring loading and temperature in structures and materials by measuring changes in natural frequencies, comprising: placing at least one sensor on the element, the at least one sensor being capable of sensing at least one of resonant vibrational frequency changes and phase angle changes indicative of changes in load on the element, the at least one sensor also measuring changes in temperature; applying a computer control unit to operate the at least one sensor so as to measure at least one of a change in a resonance frequency in the element and a change in phase angle sensed by the at least one sensor as a result of a change in load on the member; and applying the computer control unit to measure changes in temperature, and to apply a temperature calibration to calculate the load on the member.

A PCT patent application WO2014176625 discloses a method for determining a health condition of a structure, such as a bridge, based on vibration data measured of the bridge. Measured vibration data is calibrated. Features are then extracted from the calibrated data and a support vector machine classifier is then applied to the extracted features to determine the health condition of a part of the structure. Training of the support vector machine classifier by a machine learning process is also described.

It is well known that time series responses from engineering structure often exhibit nonlinear behavior. Moreover, operational and/or environmental common trends are typically believed to be nonlinearly related with response data used for damage detection. If this is the case then the linear cointegration theory may be no longer suitable for damage detection and a nonlinear approach to cointegration is needed.

Nonlinear cointegration has been studied in many different contexts. Research work demonstrates that nonstationarities and nonlinearities should be analysed simultaneously since in time series analysis nonlinearities often exist in a nonstationary context. However, it is not easy to reach this goal because the inherent difficulties in analyzing nonlinear time series models within a stationary and ergodic framework are enhanced in nonstationary contexts. This issue is also true for cointegration analysis when it is used for nonlinear and nonstationary processes. Hence, other definitions of stationarity and nonstationarity are needed in order to characterize better the usual notion of stationary 1(0) and nonstationary $I(1)$ time series, and cointegration in nonlinear contexts. The concepts of short memory and extended memory variables have been commonly used to ease this task.

A time series is said to be short memory if its information decays through time. In particular, a variable is short memory in mean (or in distribution) if the conditional mean (or conditional distribution) of the variable at time $t$ given the information at time $t - h$ converges to a constant as $h$ diverges to infinity. Shocks in short memory time series have transitory effects. In contrast, a time series is said to be extended memory in mean (or in distribution) if it is not short memory in mean (or in distribution). Shocks in extended memory time series have permanent effects. In heuristic terms, with respect to a "short memory in distribution" series, the influence of the past observations of the series decreases gradually. In the very far future, the past information is of no relevance to explain the stochastic patterns of the random variable. Whereas, regarding a "short memory in mean" series, the past information becomes progressively less relevant in the conditional $h - step$ forecast in mean of the series. This means that the concept of short memory in this context can be considered as a somewhat stronger condition than stationarity; and the concept of extended memory can be thought as a fairly stronger condition than nonstationarity.

The following general definition of nonlinear cointegration has been proposed (J.C. Escanciano, A. Escribano, Econometrics: Nonlinear Cointegration, Encyclopedia of Complexity and Systems Science, Berlin: Springer-Verlag (2009) 2757-2769): "If two or more series are of extended memory, but a nonlinear transformation of them is short memory, then the series are said to be nonlinearly cointegrated". However, a simpler and more common definition of nonlinear cointegration is used in the current investigations. Two nonstationary time series $x_t$ and $y_t$ are nonlinearly cointegrated if there exists a nonlinear function $f$ such that $z_t = f(x_t, y_t)$ is stationary.

This simplified definition is still quite general to be fully operative, and moreover, identification problems might be arisen in this general context. Hence, in practice some classes of function $f$ are often used to avoid such identification problems. For example, one can consider a function of the form $z_t = g(x_t)-h(y_t)$, and estimate $g$ and $h$ by using nonparametric estimation procedures. Another approach is to consider transformations of the form, i.e. $z_t = f(x_t)+y_t$, or $z_t = f(x_t)-y_t$. The second approach is believed to be convenient for exploring nonlinear cointegration, therefore it has been used in this description. However, the question still remains how to construct a nonlinear function $f$.

Nonlinear cointegration has been recently proposed for SHM application (E.J. Cross, K. Worden, Approaches to nonlinear cointegration with a view towards applications in SHM, Journal of Physics: Conference Series 305 (2011) 012069 - referred to as Cross et al.). This section recalls one theoretical example from this work to demonstrate the major difficulty associated with nonlinear cointegration.

A system is described using two different time series variables $x_t$ and $y_t$. The first variable $x_t$ reacts linearly with respect to some external disturbance ($D$) whereas the second variable $y_t$ reacts nonlinearly, in a quadratic way, to the same external disturbance. The given variables take the form

$$x_t = \alpha T_t + \varepsilon_{1,t} \tag{1}$$

$$y_t = \beta T_t^2 + \varepsilon_{2,t} \tag{2}$$

where $\alpha, \beta$ are constants, $T_t$ is some deterministic trend caused by the external disturbance, $\varepsilon_{1,t}$ and $\varepsilon_{2,t}$ are random normally-distributed processes. In this example, the driving trend (i.e. the external disturbance) is set to be linearly increasing with time $t$.

It is clear that a linear combination of both variables will not result in a stationary sequence. However, some combination of $y$ and the square of $x$ should produce a comparatively stationary signal

$$z_t = f(x_t, a_1) + a_2 y_t = a_1 x_t^2 + a_2 y_t \tag{3}$$

In this case the nonlinear function $f(x_t, a_1) = a_1 x_t^2$ is referred to as the cointegrating function. If the parameters $a_1$ and $a_2$ can be found so that $z_t$ is stationary, the vector $[a_1, a_2]$ will be analogous to the linear cointegrating vector, and $x$ and $y$ will be nonlinearly cointegrated. Two approaches to nonlinear cointegration have been proposed in to estimate the parameters $a_1$ and $a_2$.

The first one is a variation of the well-established Johansen's linear cointegration procedure based on the use of an augmented basis. In this way, $x_t^2$ was first computed and then included as variable in its own right in the Johansen's procedure. This means that the input to the Johansen's procedure would be $\{x_t^2, y_t\}$ and hence the only difference in the approach to the Johansen's procedure is a manipulation of the form of the variables that are linearly combined. The second approach is a nonlinear optimisation routine based on differential evolution, where the objective is to choose parameters $[a_1, a_2]$ so that $z_t$ is as stationary as possible. Two options were selected for the objective function: (1) to minimise the variance of the cointegration residuals; (2) to maximise the stationarity of the cointegration residuals. The results showed that nonlinear cointegrating vectors were created, the nonlinear trend was successfully removed, and stationary residuals were found for the times series by both proposed approaches. However, the variance of cointegration residuals was increasing with time, although cointegrated variables were mean stationary. This behavior - known as *heteroscedasticity* - implies that cointegration residuals are not strictly stationary. The problem can be further analysed when Eq. (3) is expanded using $x_t$ and $y_t$ from Eq. (1) and Eq. (2), respectively to give

$$z_t = f(x_t, a_1) + a_2 y_t = a_1 x_t^2 + a_2 y_t = a_1 (\alpha T_t + \varepsilon_{1,t})^2 + a_2 (\beta T_t^2 + \varepsilon_{2,t})$$
$$\Rightarrow z_t = a_1 (\alpha^2 T_t^2 + 2\alpha T_t \varepsilon_{1,t} + \varepsilon_{1,t}^2) + a_2 (\beta T_t^2 + \varepsilon_{2,t}) \tag{4}$$

The differential evolution and the Johansen procedure selects the parameters $a_1$ and $a_2$ so that the quadratic deterministic trends cancel each other out. The cointegration residual from the nonlinear combination in Eq. (4) will then take the form

$$z_t = 2a_1\alpha T_t\varepsilon_{1,t} + a_1\varepsilon_{1,t}^2 + a_2\varepsilon_{2,t} \qquad (5)$$

The remaining terms in Eq. (5) include not only randomly distributed noise but also a term depending on $T_t\varepsilon_{1,t}$. This term is responsible for the increasing variance, because as mentioned above, the driving trend of the simulated time series in this case was chosen to be linearly increasing with time $t$, i.e. $T_t$ is a linear deterministic trend in this case. Thus regardless of the nature of the driving trend, a combination of the type given in Eq. (3) will always result in a cointegration residual that has variance dependent on that trend. As a result heteroscedasticity will be always present in cointegration residuals obtained from the proposed approach. When the method is used for damage detection, this can lead to serious consequences.

It is clear that another solution is needed for an improved method and system for structural health monitoring, in order to create a stationary residual independent of the driving trends of the original time series.

SUMMARY

There is presented a method for detecting structural damage of a structure, the method comprising steps of: receiving measurement data ($x_t, y_t$) from sensors coupled to the structure; in a computing device, monitoring the measurement data ($x_t, y_t$) to detect a change from homoscedasticity to heteroscedasticity; and upon detecting a change from homoscedasticity to heteroscedasticity, outputting via an output interface a signal indicating a structural damage.

Preferably, the method further comprises: calculating nonlinear cointegration ($z_t$) for the measurement data ($x_t, y_t$) as $z_t = f(x_t)-y_t$; setting the condition that the nonlinear cointegration ($z_t$) becomes a zero mean series; transforming the analysed when Eq. (3) is expanded using $x_t$ and $y_t$ from Eq. (1) and Eq. (2), respectively to give

$$\begin{aligned} z_t &= f(x_t, a_1) + a_2 y_t = a_1 x_t^2 + a_2 y_t = a_1(\alpha T_t + \varepsilon_{1,t})^2 + a_2(\beta T_t^2 + \varepsilon_{2,t}) \\ \Rightarrow z_t &= a_1(\alpha^2 T_t^2 + 2\alpha T_t\varepsilon_{1,t} + \varepsilon_{1,t}^2) + a_2(\beta T_t^2 + \varepsilon_{2,t}) \end{aligned} \qquad (4)$$

The differential evolution and the Johansen procedure selects the parameters $a_1$ and $a_2$ so that the quadratic deterministic trends cancel each other out. The cointegration residual from the nonlinear combination in Eq. (4) will then take the form

$$z_t = 2a_1\alpha T_t\varepsilon_{1,t} + a_1\varepsilon_{1,t}^2 + a_2\varepsilon_{2,t} \qquad (5)$$

The remaining terms in Eq. (5) include not only randomly distributed noise but also a term depending on $T_t\varepsilon_{1,t}$. This term is responsible for the increasing variance, because as mentioned above, the driving trend of the simulated time series in this case was chosen to be linearly increasing with time $t$, i.e. $T_t$ is a linear deterministic trend in this case. Thus regardless of the nature of the driving trend, a combination of the type given in Eq. (3) will always result in a cointegration residual that has variance dependent on that trend. As a result heteroscedasticity will be always present in cointegration residuals obtained from the proposed approach. When the method is used for damage detection, this can lead to serious consequences.

"Identification of Stochastic Systems Under Multiple Operating Conditions: The Vector Dependent FP-ARX Parameterization" Control and Automation, 2006. 14th Mediterranean Conference On, IEEE, PI, 1 June 2006, discusses the problem of identifying stochastic systems under multiple operating conditions, by using excitation - response signals obtained from each condition. Each operating condition is characterized by several measurable variables forming a vector operating parameter. The problem is tackled within a framework consisting of postulated Vector dependent Functionality Pooled ARX (VFP-ARX) models, proper data pooling techniques, and statistical parameter estimation.

It is clear that another solution is needed for an improved method and system for structural health monitoring, in order to create a stationary residual independent of the driving trends of the original time series. cointegration residual using a transformation R, wherein $R = \dfrac{1}{\sqrt{1 + [F'(x_t)]^2}}$ to obtain a transformed cointegration residual as

$$z_t^R = \frac{z_t}{\sqrt{1+[F'(x_t)]^2}}$$ ; calculating a modified cointegration residual $z_t^* = \frac{f(x_t)-y_t}{\sqrt{1+[f'(x_t)]^2}}$ ; and determining wheth-

er the modified cointegration residual $z_t^*$ is homoscedastic or heteroscedastic.

Preferably, determining whether the modified cointegration residual $z_t^*$ is homoscedastic or heteroscedastic is performed using the adapted Breusch-Pagan test procedure.

There is also presented a computer program comprising program code means for performing all the steps of the computer-implemented method as described herein when said program is run on a computer, as well as a computer readable medium storing computer-executable instructions performing all the steps of the computer-implemented method as presented herein when executed on a computer.

There is also presented a computer-implemented system for detecting damage in an object under test, the system comprising a computing device configured to perform the method presented herein.

BRIEF DESCRIPTION OF DRAWINGS

These and other objects of the invention presented herein are accomplished by providing a system and method for structural health monitoring. Further details and features of the present invention, its nature and various advantages will become more apparent from the following detailed description of the preferred embodiments shown in a drawing, in which:

Fig. 1 presents a general schematic of the system for structural health monitoring;
Figs. 2-6 present experimental measurement results.

DETAILED DESCRIPTION

SUMMARY

There is presented a method and system for detecting structural damage of a structure, according to the appended claims.

BRIEF DESCRIPTION OF DRAWINGS

These and other objects of the invention presented herein are accomplished by providing a system and method for structural health monitoring. Further details and features of the present invention, its nature and various advantages will become more apparent from the following detailed description of the preferred embodiments shown in a drawing, in which:

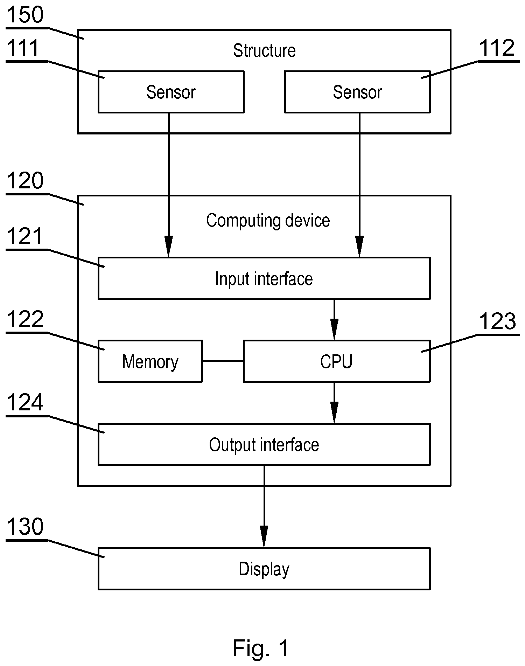

Fig. 1 presents a general schematic of the system for structural health monitoring;

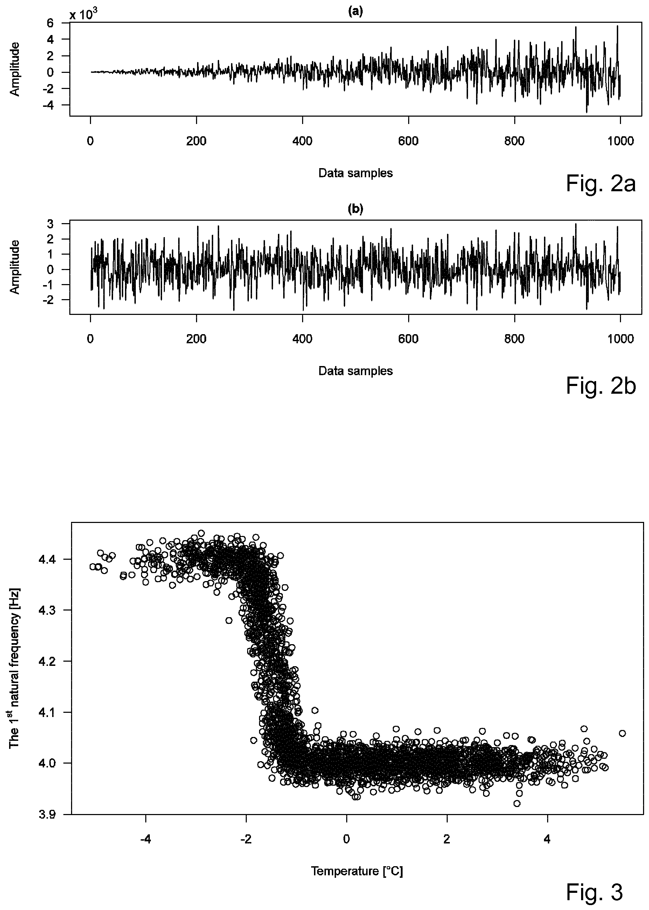

Figs. 2-6 present experimental measurement results.

DETAILED DESCRIPTION

Fig. 1 presents a general schematic of the system 100 for structural health monitoring. The system comprises at least two sensors 111, 112 coupled to a structural element 150 to be monitored. Measurement data $x_t$, $y_t$ from the sensors 111, 112 is communicated, in a wired or wireless manner, to a computing device 120 configured to execute the method of the present invention, as described below. The computing device 120 comprises an input interface 121 for receiving data from the sensors 111, 112. The computing device 120 may be controlled by one or more computer programs. Such computer programs are typically executed by utilizing the computing resources in the computing device. Applications are stored on a non-transitory medium. An example of a non-transitory medium is a non-volatile memory, for example a flash memory while an example of a volatile memory is RAM. The memories are jointly indicated by reference 122. The computer instructions are executed by a processor (CPU - Central Processing Unit) 123. Data calculated by the CPU are then output as a signal indicating structural damage via an output interface 124. The output interface 124 may be a data interface configured to provide the data in a predefined format, such as data to be used by other computing devices. Alternatively, the output interface 124 may be a graphical user interface configured to present various calculated data to the user in form of e.g. plots, on a display 130.

A homoscedastic nonlinear cointegration is proposed for use in the present method. The method overcomes the heteroscedastic problem related to cointegration residuals by offering a variance stabilizing nonlinear cointegration.

Following the work presented by Cross et al., two time series can be defined as

$$x_t = T_t + \varepsilon_{1,t} \tag{6}$$

$$y_t = F(T_t) + \varepsilon_{2,t} \tag{7}$$

where:

$T_t$ is some deterministic trend caused by the external disturbance,
$\varepsilon_{1,t}, \varepsilon_{2,t}$ are independent and identically distributed random variables and function
$F(T_t)$ has a continuous and differentiable first derivative.

It is assumed that $\varepsilon_{1,t}$ and $\varepsilon_{2,t}$ have zero mean and they are relatively small to $T_t$ and independent from $T_t$. It is important to note that when the constants $\alpha$ and $\beta$ are set to $\alpha = \beta = 1$, and $F(T_t) = T_t^2$ , Eq. (6) and Eq. (7) are identical to Eq. (1) and Eq. (2), respectively. This means that the investigation presented herein has used the same time series variables as in Cross et al.

A simple form of nonlinear cointegration given as

$$z_t = f(x_t) + y_t \tag{8}$$

can be proposed. This form can be rewritten - without loss of generality - into

$$z_t = f(x_t) - y_t \tag{9}$$

due to the calculation procedure that will be more lucid for Eq. (9) than Eq. (8). When $x_t$ and $y_t$ from Eq. (6) and Eq. (7), respectively are substituted to Eq. (9) the cointegration residual can be obtained as

$$z_t = f(x_t) - y_t = f(T_t + \varepsilon_{1,t}) - F(T_t) - \varepsilon_{2,t} \tag{10}$$

It is clear that for $z_t$ to become a zero mean series one can select the cointegrating function $f = F$, which thus yields

$$z_t = F(T_t + \varepsilon_{1,t}) - F(T_t) - \varepsilon_{2,t} \tag{11}$$

Next, using the first degree Taylor approximation formula defined as

$$F(x + a) \approx F(x) + F'(x)a + o(|a|^2) \tag{12}$$

for $F(T_t + \varepsilon_{1,t})$ results in

$$F(T_t + \varepsilon_{1,t}) \approx F(T_t) + F'(T_t)\varepsilon_{1,t} + o(|\varepsilon_{1,t}|^2) \tag{13}$$

Then, substituting Eq. (13) into Eq. (11) yields

$$z_t = F(T_t) + F'(T_t)\varepsilon_{1,t} + o\left(\left|\varepsilon_{1,t}\right|^2\right) - F(T_t) - \varepsilon_{2,t} \tag{14}$$

The above equation can be approximated as

$$z_t \approx F'(T_t)\varepsilon_{1,t} - \varepsilon_{2,t} \tag{15}$$

Eq. (15) shows that the cointegration residual $z_t$ is zero mean, but its variance is not constant and strongly depends on the deterministic trend $T_t$. Since $\varepsilon_{2,t}$ is independent from $\varepsilon_{1,t}$ and $T_t$ the variance of $z_t$ can be estimated as

$$Var(z_t) \approx Var(F'(T_t)\varepsilon_{1,t} - \varepsilon_{2,t}) = Var(F'(T_t)\varepsilon_{1,t}) + Var(-\varepsilon_{2,t}) \tag{16}$$

$$\Rightarrow Var(z_t) \approx [F'(T_t)]^2 Var(\varepsilon_{1,t}) + Var(\varepsilon_{1,t}) = Var\left(\varepsilon_{1,t}\sqrt{1+[F'(T_t)]^2}\right) \tag{17}$$

From Eq. (6) one can take that $x_t \approx T_t$ then Eq. (17) becomes

$$Var(z_t) \approx Var\left(\varepsilon_{1,t}\sqrt{1+[F'(x_t)]^2}\right) \tag{18}$$

Eq. (15) shows that variance $Var(z_t)$ is not constant because it depends on $\sqrt{1+[F'(x_t)]^2}$ . This is where the problem of heteroscedasticity appears. In order to solve this problem, the transformation $R$ for the cointegration residual $z_t$ can be proposed as

$$R = \frac{1}{\sqrt{1+[F'(x_t)]^2}} \tag{19}$$

This complies well with the problem of the removal of the effect of heteroscedasticity. Finally, one obtains the transformed cointegration residual $z_t^R$ that has the form

$$z_t^R = \frac{z_t}{\sqrt{1+[F'(x_t)]^2}} \tag{20}$$

It is important to note that that the proposed solution is possible if and only if the cointegration residual $z_t$ is zero mean. This requirement has been met in the case of the transformed cointegration residual proposed above. Clearly, $\sqrt{1+[F'(x_t)]^2}$ is constant if and only if $F'(x_t)$ is constant. Furthermore, when $F'(x_t)$ is constant then $F(x_t)$ is linear, which thus implies that $x_t$ and $y_t$ are linearly related. This explains why cointegration residuals - created in the context of linear cointegraion - are homoscedastic without any modification.
When Eq. (9) is met together with the condition for $z_t$ to become a zero mean series (i.e. when $f = F$) then Eq. (20) becomes

$$z_t^* = \frac{f(x_t) - y_t}{\sqrt{1+[f'(x_t)]^2}} \tag{21}$$

This equation gives the *modified cointegration residual* $z_t^*$ that is not only zero mean but also homoscedastic. It is important to note that the solution proposed by Eq. (21) is general and thus can be applied for any form of unknown functions (trends).

In order to test for the presence of heteroscedasticity in the analysed data, various tests can be used. In particular, it is preferable to use an adapted Breusch-Pagan test procedure, as described in the publication "A simple test for heteroscedasticity and random coefficient variation" by T.S. Breusch, A.R. Pagan, Econometrica 47 (1979) 1287-1294. In principle, the Breusch-Pagan test tests for conditional heteroscedasticity, i.e. it tests whether the estimated variance of the residuals from a regression are dependent on the values of the independent variables. The approach is based on the Lagrange Multiplier (LM) test statistic with an assumption that the error terms are normally distrubuted.

The linear time series regression model for one independent variable $x_{1t}$ can be written as

$$y_t = \alpha_0 + \alpha_1 x_{1t} + \varepsilon_t \qquad (22)$$

where $y_t$ is a dependent variable, $\varepsilon_t$ is a random error term (or a residual), and $(\alpha_0, \alpha_1)$ are coefficients.

Next, in order to test for the presence of heteroscedasticity in the residual $\varepsilon_t$ the auxiliary regression model is formed as

$$\varepsilon_t^2 = \beta_0 + \beta_1 x_{1t} + error \qquad (23)$$

where $(\beta_0, \beta_1)$ are coefficients.

The Breusch-Pagan heteroscedasticity test is performed by regressing the squared residuals directly on the independent variables. In the linear time series regression model, one can assume that the mean of the residual $\varepsilon_t$ is zero. Hence, the estimated variance of the residual (i.e. $\varepsilon_t^2$ ) in Eq. (23) is constant if and only if it is independent from the independent variable $x_{1t}$. If this is the case then $\beta_1$ should be close/equal to zero. The LM test statistic is used to evaluate the significance of $\beta_1$.

It should be noted that only one independent variable has been used in the current investigations. In general case when more than one independent variables are employed then the test statistic equals $NR^2$, where $N$ is the sample size and $R^2$ is the coefficient of determination in the auxiliary regression.

Since the original Breusch-Pagan test is only used to test for heteroscedasticity in a linear regression model. Hence, the test has been adapted to be able to use in this paper, i.e. to test for the presence of heteroscedasticity in the cointegration residuals obtained from nonlinear cointegration analysis, which is explained in the following.

Firstly, the linear regression model in Eq. (22) can be rewritten to the form $y_t - f(x_t) = \varepsilon_t$, where $f(x_t) = \alpha_0 + \alpha_1 x_{1t}$. In this from, the concepts of independent and dependent variables become invisible.

Secondly, in general case since the mean of $\varepsilon_t$ should not be assumed to be equal to zero so that the estimated variance of the residual $\varepsilon_t$ may take the form $[\varepsilon_t - E(\varepsilon_t)]^2$, where $E(\varepsilon_t)$ is the mean of $\varepsilon_t$. Then, the auxiliary regression model can be formed as

$$[\varepsilon_t - E(\varepsilon_t)]^2 = \beta_0 + \beta_1 y_t + error \qquad (24)$$

Following the same discussion as above, Eq. (24) shows that the residual $\varepsilon_t$ is homoscedastic if the term on the left, i.e. $[\varepsilon_t - E(\varepsilon_t)]^2$, is independent from $y_t$. This implies that the coefficient $\beta_1$ should be equal to zero. In the current investigations, the significance of $\beta_1$ is assessed by using the Student's t-test statistic, which is shortly described as follow: The null hypothesis is true, i.e. there is no heteroscedasticity in the residual $\varepsilon_t$, if the coefficient $\beta_1$ is insignificant (i.e. *p-value* > 0.05). Conversely, the alternative is true, i.e. there is heteroscedasticity in the residual $\varepsilon_t$, if the coefficient $\beta_1$ is significant (i.e. *p-value* < 0.05).

It should be noted that $x_{1t}$ can be considered in the auxiliary regression model in Eq. (24), instead of $y_t$. Since $y_t$ has been considered in the auxiliary regression model, the correlation between the absolute value of $\varepsilon_t$ and $x_{1t}$ can be checked to determine how the values of $x_{1t}$ deviate from $\varepsilon_t$.

EXAMPLES

Examples that explain the homoscedastic nonlinear cointegration method and illustrate its application to nonlinear trend removal and possible damage detection are presented in this section. Three different time series - i.e. one with a nonlinear quadratic deterministic trend, simulated vibration data and experimental wind turbine data - are analysed.

## Quadratic cointegrating function

This section recalls the nonlinear cointegrating function $f(x_t) = x_t^2$ that has been used in Cross et al. The objective is to demonstrate that the homoscedastic nonlinear cointegration method can remove heteroscedasticity from cointegration residuals.

When the nonlinear cointegration form given by Eq. (9) is used the cointegration residual can be calculated as

$$z_t = f(x_t) - y_t = x_t^2 - y_t \qquad (25)$$

Similarly, the homoscedastic nonlinear cointegration - given by Eq. (21) can be used. This results in the modified cointegration residual that takes the form

$$z_t^* = \frac{f(x_t) - y_t}{\sqrt{1 + [f'(x_t)]^2}} = \frac{x_t^2 - y_t}{\sqrt{1 + [2x_t]^2}} \qquad (26)$$

Fig. 2a and Fig. 2b present the cointegration residual $z_t$ and the modified cointegration residual $z_t^*$, respectively. The results show that the nonlinear quadratic deterministic trend was successfully removed in both cases. However, the variance of $z_t$ increases with time (i.e. $z_t$ is heteroscedastic), whereas the variance of $z_t^*$ is relatively stable (i.e. $z_t^*$ is homoscedastic). The adapted Breusch-Pagan test procedure was used to confirm these results. Consequently, the test statistic for $z_t$ is significant because *p-value* < 0.0001 < 0.05, therefore $z_t$ is heteroscedastic. In contrast, the relevant test statistic for $z_t^*$ is insignificant because *p-value* = 0.318 > 0.05, so that $z_t^*$ is homoscedastic. This simple example demonstrates that the proposed homoscedastic nonlinear cointegration method can remove heteroscedasticity from cointegration residuals.

## Simulated bridge data

The example presented in this section shows that the proposed homoscedastic nonlinear cointegration method can remove undesired nonlinear trends from data and reliably detect structural damage. Simulated data are used in this example.

Vibration/modal data are often used to monitor civil engineering structures. Various methods have been developed in practice for structural damage detection. Often natural frequencies are used to obtain information about possible damage. The assumption is structural damage reduces stiffness leading to the reduction of natural frequencies. However, it is well known that natural frequencies of large civil engineering structures - such as bridges - can be affected by environmental conditions (e.g. temperature or heavy rain).

The nonlinear relation between modal properties of the bridge and daily temperature was explored in this example. The nonlinear dependence of the first natural frequency (given in *Hz*) of the bridge on temperature (given in *°C*) was simulated for 5760 measurements using the *f(t)* function that was defined as

$$f(t) = \begin{cases} 4.4 & for \quad t \leq -2 \\ 4.2 + 0.2\cos[(t+2)\pi] & for \quad t \in (-1, -2) \\ 4.0 & for \quad t \geq -1 \end{cases} \qquad (27)$$

Once the data were simulated using Eq. (27), a random number from a normal distribution noise process with the mean value $\mu = 0$ and the standard deviation $\sigma = 0.02$ - was added to each simulated value *f(t)* to reflect measurement noise. The natural frequency was simulated for daily temperature variations from the minimum value around -4 *°C* (night time) to the maximum value around 6 °C (day time). The $f(t)$ function was defined to exhibit an approximate shape of saturation nonlinearity - i.e. the frequency-temperature relationship exhibited a linear trend for the values of temperature from -2 °C to -1 °C; below and above these temperatures the natural frequency was approximately 4.4 and 4.0 *Hz*, respectively. Fig. 3 gives the simulated data demonstrating how the first natural frequency of the bridge changes nonlinearly with temperature. Over one day and night of monitoring, the most dramatic change of natural frequency can be observed around -1.5 °C.

It is important to note that the natural frequency data were simulated to resemble the experimental vibration data from the *Z24* bridge - a pre-stressed concrete highway bridge - that joins two small villages in Switzerland between Bern and Zurich (B. Peeters, G.D. Roeck, One year monitoring of the Z24-Bridge: environmental influences versus damage events, Earthquake Engineering & Structural Dynamics 30 (2001) 149-171.). Although, the original experimental data were used in the nonlinear cointegration example given by Cross et al., the simulated data were used intentionally in the current investigations to account for three different structural conditions of the bridge, as described below. The effect of simulated damage was simply introduced to the first natural frequency in a nonlinear manner by multiplying the $f(t)$ function by the factor $\sqrt{k}$, where $k$ represents the stiffness of the analysed bridge. It is well known that the change of stiffness alters the natural frequency. Thus in this example the analysed natural frequency was modified by both effects, i.e. environmental condition (temperature) and structural damage. The condition of the bridge (or in other words the severity of damage) was simulated following three steps:

1. The bridge was undamaged for the first two days, i.e. the value of $k$ was kept 1, and therefore the first natural frequency depended only on the daily temperature variations.
2. During the third day, the bridge stiffness was reduced gradually and finally reached 95% of the normal value by the end of the day (i.e. $k = 0.95$); this simulates the initial structural deterioration (or damage). Hence, since the beginning of the third day the first natural frequency depended on both, i.e. temperature and damage.
3. At the beginning of the fourth day, the bridge stiffness was reduced suddenly from 95% to 90% of the normal stiffness value (i.e. $k = 0.9$); the deteriorating damage condition reached the maximum severity.

Once the data were simulated to reflect four days of monitoring, the nonlinear cointegration procedure and the homoscedastic nonlinear cointegration procedure were used to obtain the original cointegration residual $z_t$ and the modified cointegration residual $z_t^*$, respectively.

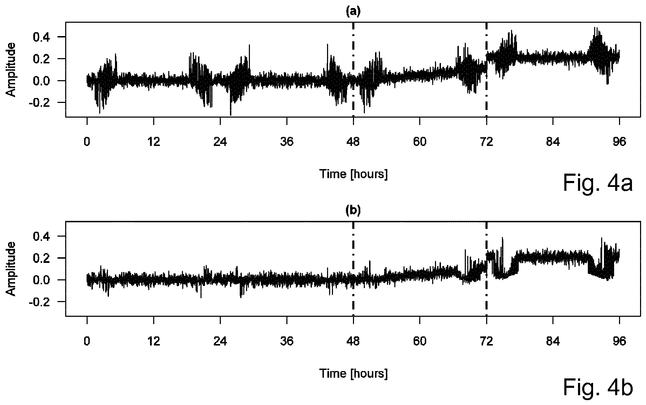

Fig. 4a and Fig. 4b present the results obtained for the $z_t$ and $z_t^*$, respectively. The first and second dash-dotted vertical line in these figures indicates the start of the third day (or deteriorating continuous damage) and the start of the fourth day (or the moment of sudden damage), respectively. When temperature variations are present in the data but the bridge is not damaged (the first two days) the original cointegration residual $z_t$ in Fig. 4a exhibits four (two per day) noisy patterns of local peaks corresponding to daily temperature variations (following the characteristic given in Fig. 3). In contrast, the modified cointegration residual $z_t^*$ in Fig. 4b is much smoother and does not display any clear noisy patterns of peaks. This implies that the variations of temperature manifest themselves strongly in the case of the original cointegration residual $z_t$, but much less in the case of the modified cointegration residual $z_t^*$. In other words, the nonlinear temperature-dependent trend was significantly removed from the $z_t^*$, but not completely removed from the $z_t$. The adapted Breusch-Pagan test procedure was used to test for the presence of heteroscedasticity in both cointegration residuals. The test statistic for $z_t$ was significant because *p-value* < 0.0001 < 0.05, indicating the heteroscedastic behaviour. In contrast, the test statistic for $z_t^*$ was insignificant because *p-value* = 0.213 > 0.05. This statistic indicates that the nonlinear cointegration residual $z_t^*$ is homoscedastic, as expected.

When temperature variations are present and the bridge has some initial progressing damage (the third day) the nonlinear temperature-dependent trend is again removed from the $z_t^*$, but not removed from $z_t$; two noisy patterns of local peaks can be observed between 48 and 72 hours. In addition, there is an upward linear trend in that region for both characteristics in Fig. 4a and Fig. 4b. This trend reflects the gradual reduction of stiffness in the third day. However, by the end of the third day when the stiffness reduction reaches nearly 95% of the initial value, a significant change in the $z_t^*$ characteristics can be observed in Fig. 4b. This change is a clear indication of damage. The adapted Breusch-Pagan test procedure was applied again to the third day data to test for the presence of heteroscedasticity in the $z_t$ and

$z_t^*$ residuals. The test statistics for both residuals were significant because *p-value* < 0.0001 < 0.05, indicating that the $z_t$ and $z_t^*$ residuals are heteroscedastic.

During the fourth day - when temperature variations are present and the progressing damage of the bridge reaches the maximum level - Fig. 4a shows that the effect of temperature variations is still present in the $z_t$ residual. However, a small change in the mean value of $z_t$ can be observed at the second dash-dotted vertical line. This change looks like a "jump" in the analysed characteristics. This feature - also observed in the $z_t^*$ residual in Fig. 4b is due to the abrupt reduction of stiffness from 95 to 90% of the initial stiffness value. Again, the adapted Breusch-Pagan test procedure was used to test for the presence of heteroscedasticity in both cointegration residuals and in this case the results obtained are the same as in the third day, i.e. both statistics indicate that the $z_t$ and $z_t^*$ cointegration residuals are heteroscedastic.

In summary, the effect of temperature variations was not removed from the original nonlinear cointegration residual $z_t$. This residual is heteroscedastic in the entire analysed period of time. Consequently, this behavior can hide the effect of damage, thus leading to false-positive and/or false-negative damage detection scenarios. In contrast, the modified nonlinear cointegration residual $z_t^*$ does not exhibit any temperature variations; the effect of temperature variations was successfully removed. As a result the $z_t^*$ characteristics is homoscedastic until the monitored structure is damaged. Therefore the adapted Breusch-Pagan heteroscedasticity test can be used to detect damage initiation.

**Wind turbine data**

The third example illustrates the application of the homoscedastic nonlinear cointegration to the analysis of wind turbine operational data. Wind turbines are an important class of machines with growing penetration in the wind generation market.

Economics of the wind farms operation is very different from conventional sources. The main reason is the distribution of costs during the lifetime of the turbine. In the case of wind power generation, the capital expenditures are higher than for coal or gas plants (on the per kilowatt basis), but operational expenditures are much smaller, since there is no fuel cost. The main factor, which can ruin this financial model is unexpected failure, which results in costly repair and often months of machine unavailability. Hence, condition monitoring of wind turbines - in particular at the early stage of a fault occurrence - is an essential problem in wind turbines engineering.

Wind turbine data used in this paper originate from a series of experimental measurements for a wind turbine drivetrain with a nominal power of 2 MW. The SHM system for the wind turbine measured few operational parameters - i.e. wind speed, rotor speed, generator shaft rotational speed, generator temperature, gearbox temperature, generator voltage, generator current, active power, and active power delivered - for different operating conditions.

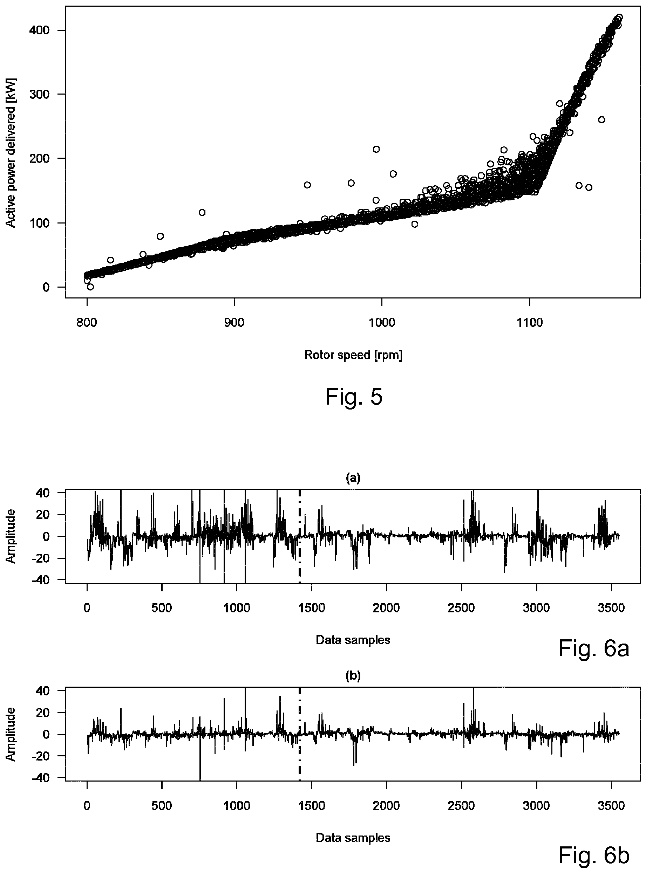

The relation between rotor speed (in *rpm*) and active power delivered (in *kW*) is important for wind turbine monitoring. This characteristic - for the rotor speed higher than 800 *rpm* - was used for the nonlinear cointegration analysis in this example. It is important to note that only the data from an intact wind turbine was available and used in these investigations. The objective was to demonstrate that the proposed method leads to the homoscedastic cointegration residuals for undamaged wind turbine, regardless of changes in the relation between rotor speed and active power delivered. The analysed data - shown in Fig. 5 - clearly display a nonlinear (or to be more precise bi-linear) trend.

The homoscedastic nonlinear cointegration method was applied to the data. The original cointegration residual $z_t$ was computed using Eq. (9), whereas the modified cointegration residual $z_t^*$ was calculated using Eq. (21). In this example, the rotor speed is the variable $x_t$, the active power is the variable $y_t$ and the function $f(x_t)$ describes the relation between the rotor speed and the active power delivered.

Since $f(x_t)$ is unknown a local regression algorithm was used to estimate this function. An estimate of the function $f$ at $x_0$ - i.e. $f(x_0)$ - was calculated using the nearest twelve values of $x_0$ from the training data; only the first 40% of the data were used for training to avoid overfitting. Then, the least squares regression was employed for this subset of values to estimate or predict the value of $f(x_0)$. The gradient (or slope) of the calculated regression was considered as the first derivative of the function $f$ at $x_0$, i.e. $f'(x_0)$. The entire procedure was repeated for all remaining values, i.e. $x_1, x_2, \ldots$, which resulted in the estimate of the function $f$.

Fig. 6a and Fig. 6b give the original $z_t$ and modified $z_t^*$ nonlinear cointegration residuals, respectively. The first observation of the results indicates much larger amplitude variability (amplitude ranges from -40 to 40) for $z_t$ if

compared with $z_t^*$ (amplitude variability ranges from -20 to 20). The adapted Breusch-Pagan test procedure was used to test for the presence of heteroscedasticity in both cointegration residuals. As a result, the test statistic for $z_t$ was significant because *p-value* < 0.0001 < 0.05, indicating that $z_t$ is heteroscedastic. In contrast, the test statistic for $z_t^*$ was insignificant because *p-value* = 0.168 > 0.05, indicating that $z_t^*$ is homoscedastic. Moreover, the correlations between the rotor speed ($x_t$) and the absolute values of $z_t$ and $z_t^*$ were calculated as *0.46* and *0.183,* respectively. This means that the rotor speed $x_t$ contains less information about deviation of $z_t^*$ in comparison with $z_t$.

In summary, when the data from an intact wind turbine was analysed, the modified nonlinear cointegration residual $z_t^*$ was homoscedastic for the whole data set investigated, regardless of changes in the relation between rotor speed and active power delivered. The homoscedascity is a sign of undamaged condition. It is expected that the homoscedastic characteristics would be broken if the data for damage wind turbine were available and analysed.

**Claims**

1. A method for detecting structural damage of a structure (110), the method comprising steps of:

   - receiving measurement data ($x_t, y_t$) from sensors (111, 112) coupled to the structure (110);

   **characterized in that** it further comprises steps of:

   - in a computing device (120), monitoring the measurement data ($x_t, y_t$) to detect a change from homoscedasticity to heteroscedasticity by use of a test for the presence of heteroscedasticity; and
   - upon detecting a change from homoscedasticity to heteroscedasticity, outputting via an output interface (124) a signal indicating a structural damage.

2. The method according to claim 1, further comprising:

   - calculating nonlinear cointegration ($z_t$) for the measurement data ($x_t, y_t$) as $z_t = f(x_t) - y_t$;
   - setting the condition that the nonlinear cointegration ($z_t$) becomes a zero mean series;

   - transforming the cointegration residual using a transformation R, wherein $R = \dfrac{1}{\sqrt{1 + [F'(x_t)]^2}}$ to obtain a transformed cointegration residual as $z_t^R = \dfrac{z_t}{\sqrt{1 + [F'(x_t)]^2}}$ ;

   - calculating a modified cointegration residual $z_t^* = \dfrac{f(x_t) - y_t}{\sqrt{1 + [f'(x_t)]^2}}$ ; and

   - determining whether the modified cointegration residual $z_t^*$ is homoscedastic or heteroscedastic.

3. The method according to claim 2, wherein determining whether the modified cointegration residual $z_t^*$ is homoscedastic or heteroscedastic is performed using the adapted Breusch-Pagan test procedure.

4. A computer program comprising program code means for performing all the steps of the computer-implemented method according to claim 1 or 2 or 3 when said program is run on a computer.

5. A computer readable medium storing computer-executable instructions performing all the steps of the computer-implemented method according to claim 1 or 2 or 3 when executed on a computer.

6. A computer-implemented system for detecting damage in an object under test, the system comprising a computing device (120) configured to perform the method of claims 1 or 2 or 3.

**Patentansprüche**

1. Verfahren zum Erkennen struktureller Fehler einer Struktur (110), wobei das Verfahren die folgenden Schritte umfasst:

   - Empfangen von Messdaten ($x_t$, $y_t$) von Sensoren (111, 112), die mit der Struktur (110) gekoppelt sind;

   **dadurch gekennzeichnet, dass** das Verfahren ferner die folgenden Schritte umfasst:

   - Überwachen der Messdaten ($x_t$, $y_t$) in einer Rechenvorrichtung (120), um eine Veränderung von Homoskedastie zu Heteroskedastie unter Verwendung eines Tests für die Präsenz von Heteroskedastie zu erkennen; und
   - nach Erkennung einer Änderung von Homoskedastie zu Heteroskedastie Ausgeben eines Signals, das einen strukturellen Fehler anzeigt, über eine Ausgangsschnittstelle (124).

2. Verfahren nach Anspruch 1, ferner umfassend:

   - Berechnen einer nichtlinearen Kointegration ($z_t$) für die Messdaten ($x_t$, $y_t$) als $z_t = f(x_t) - y_t$;
   - Festlegen der Bedingung, dass die nichtlineare Kointegration ($z_t$) eine mittelwertfreie Reihe wird;
   - Transformieren des Kointegrationsrests unter Verwendung einer Transformation R, mit $R = \dfrac{1}{\sqrt{1+[F'(x_t)]^2}}$

   zum Erhalten eines modifizierten Kointegrationsrests als $z_t^R = \dfrac{z_t}{\sqrt{1+[F'(x_t)]^2}}$;

   - Berechnen eines modifizierten Kointegrationsrests $z_t^* = \dfrac{f(x_t)-y_t}{\sqrt{1+[f'(x_t)]^2}}$; und

   - Bestimmen, ob der modifizierte Kointegrationsrest $z_t^*$ homoskedastisch oder heteroskedastisch ist.

3. Verfahren nach Anspruch 2, wobei das Bestimmen, ob der modifizierte Kointegrationsrest $z_t^*$ homoskedastisch oder heteroskedastisch ist, unter Verwendung der adaptierten Breusch-Pagan-Testmethode durchgeführt wird.

4. Computerprogramm, das Programmcodemittel zum Ausführen aller Schritte des computerimplementierten Verfahrens nach Anspruch 1, 2 oder 3 umfasst, wenn das Programm auf einem Computer ausgeführt wird.

5. Computerlesbares Medium, das mittels Computer ausführbare Anweisungen speichert, die alle Schritte des computerimplementierten Verfahrens nach Anspruch 1, 2 oder 3 ausführen, wenn das Programm auf einem Computer ausgeführt wird.

6. Computerimplementiertes System zum Erkennen eines Fehlers in einem getesteten Objekt, wobei das System eine Rechenvorrichtung (120) umfasst, die zum Ausführen des Verfahrens nach Anspruch 1, 2 oder 3 gestaltet ist.

**Revendications**

1. Procédé pour détecter des dommages structurels d'une structure (110), le procédé comprenant l'étape consistant à :

   recevoir des données de mesure ($x_t$, $y_t$) de capteurs (111, 112) accouplés à la structure (110) ;
   **caractérisé en ce qu'**il comprend en outre les étapes consistant à :

   dans un dispositif de calcul (120), surveiller les données de mesure ($x_t$, $y_t$) pour détecter un passage de l'homoscédasticité à l'hétéroscédasticité en utilisant un test pour la présence de l'hétéroscédasticité ; et
   lors de la détection d'un passage de l'homoscédasticité à l'hétéroscédasticité, émettre par l'intermédiaire d'une interface de sortie (124) un signal indiquant un dommage structurel.

2. Procédé selon la revendication 1, comprenant en outre les étapes consistant à :

   calculer la cointégration non linéaire ($z_t$) pour les données de mesure ($x_t$, $y_t$) comme $z_t = f(x_t) - y_t$ ;
   fixer la condition que la cointégration non linéaire ($z_t$) devienne une série moyenne zéro ;

transformer le résidu de cointégration à l'aide d'une transformation R, $R = \frac{1}{\sqrt{1+[F'(x_t)]^2}}$ pour obtenir un résidu de cointégration transformé comme $z_t^R = \frac{z_t}{\sqrt{1+[F'(x_t)]^2}}$ ;

calculer un résidu de cointégration modifié $z_t^* = \frac{f(x_t)-y_t}{\sqrt{1+[f'(x_t)]^2}}$ ; et

déterminer si le résidu de cointégration modifié $z_t^*$ est homoscédastique ou hétéroscédastique.

3. Procédé selon la revendication 2, la détermination du fait que le résidu de cointégration modifié résiduel $z_t^*$ est homoscédastique ou hétéroscédastique étant réalisée en utilisant la procédure de test Breusch-Pagan adaptée.

4. Programme informatique comprenant un moyen de code de programme pour exécuter toutes les étapes du procédé mis en oeuvre par ordinateur selon la revendication 1, 2 ou 3 lorsque ledit programme est exécuté sur un ordinateur.

5. Support lisible par ordinateur sur lequel sont mémorisées des instructions exécutables par ordinateur exécutant toutes les étapes du procédé mis en oeuvre par ordinateur selon la revendication 1, 2 ou 3 lorsqu'elles sont exécutées sur un ordinateur.

6. Système mis en oeuvre par ordinateur pour détecter des dommages dans un objet testé, le système comprenant un dispositif informatique (120) conçu pour exécuter le procédé selon les revendications 1, 2 ou 3.

150

111

Structure

112

Sensor

Sensor

120

Computing device

121

Input interface

122

123

Memory

CPU

124

Output interface

130

Display

Fig. 1

**(a)**

Fig. 2a

**(b)**

Fig. 2b

Fig. 3

**(a)**

Fig. 4a

**(b)**

Fig. 4b

Fig. 5

Fig. 6a

Fig. 6b

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 20080011091 A
- WO 2014176625 A

### Non-patent literature cited in the description

- Econometrics: Nonlinear Cointegration. **J.C. ESCANCIANO ; A. ESCRIBANO.** Encyclopedia of Complexity and Systems Science. Springer-Verlag, 2009, 2757-2769
- **E.J. CROSS ; K. WORDEN.** Approaches to nonlinear cointegration with a view towards applications in SHM. *Journal of Physics: Conference Series,* 2011, vol. 305, 012069
- Identification of Stochastic Systems Under Multiple Operating Conditions: The Vector Dependent FP-ARX Parameterization. Control and Automation, 2006. 14th Mediterranean Conference On. IEEE, 01 June 2006
- **T.S. BREUSCH ; A.R. PAGAN.** A simple test for heteroscedasticity and random coefficient variation. *Econometrica,* 1979, vol. 47, 1287-1294
- **B. PEETERS ; G.D. ROECK.** One year monitoring of the Z24-Bridge: environmental influences versus damage events. *Earthquake Engineering & Structural Dynamics,* 2001, vol. 30, 149-171